(19)

Europäisches
Patentamt
European
Patent Office
Office européen
des brevets

(11) **EP 3 333 598 A1**

(12) **EUROPEAN PATENT APPLICATION**
published in accordance with Art. 153(4) EPC

(43) Date of publication:
**13.06.2018 Bulletin 2018/24**

(21) Application number: **16831882.2**

(22) Date of filing: **08.07.2016**

(51) Int Cl.:
*G02B 1/111* (2015.01)    *B32B 27/20* (2006.01)
*C08K 7/26* (2006.01)    *C08L 101/00* (2006.01)
*G02B 1/18* (2015.01)

(86) International application number:
**PCT/JP2016/003244**

(87) International publication number:
**WO 2017/022175 (09.02.2017 Gazette 2017/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.08.2015 JP 2015155359**

(71) Applicant: **Panasonic Intellectual Property
Management Co., Ltd.
Osaka-shi, Osaka 540-6207 (JP)**

(72) Inventors:
• **HORI, Kenya
Osaka-shi,
Osaka 540-6207 (JP)**

• **INOUE, Hirohumi
Osaka-shi,
Osaka 540-6207 (JP)**
• **SHIBATA, Nobuhiko
Osaka-shi,
Osaka 540-6207 (JP)**
• **TAKEUCHI, Hideki
Osaka-shi,
Osaka 540-6207 (JP)**
• **SUGIMOTO, Seishi
Osaka-shi,
Osaka 540-6207 (JP)**

(74) Representative: **Vigand, Philippe et al
Novagraaf International SA
Chemin de l'Echo 3
1213 Onex - Genève (CH)**

(54) **COMPOSITION FOR OPTICAL FILMS, BASE HAVING OPTICAL FILM, MOLDED BODY AND METHOD FOR PRODUCING MOLDED BODY**

(57)    A composition of an optical film contains silica-based hollow microparticles, a matrix precursor, a nonvolatile liquid, and a volatile solvent. The nonvolatile liquid has a vapor pressure of 500 Pa or less and a boiling point of 250°C or higher. The volatile solvent is more volatile than the nonvolatile liquid. The content of the nonvolatile liquid is in the range from 0.1 to 30 parts by mass, inclusive, per 100 parts by mass of the sum of the silica-based hollow microparticles and the matrix precursor.

**EP 3 333 598 A1**

**Description**

**TECHNICAL FIELD**

The present disclosure relates to a composition of an optical film such as an anti-reflective film that is applied to the surface of a display device or other similar devices to prevent the reflection of outside light. The present disclosure further relates to a base material and a molding each including such an optical film as their outermost surface, and a method for producing such a molding.

**BACKGROUND ART**

Films and other materials have been proposed for protecting the surface of a display device used in mobile phones, tablet terminals, car navigations, and other similar apparatuses. For example, each of Patent Literatures 1 and 2 proposes a protective resin film provided, on its one side, with an adhesive layer to be stuck to the surface of a display panel.

In some display devices, the outermost layer of the display screen is made from a base material such as a plastic film including either an anti-glare layer or an anti-reflective film. This prevents the reflection of outside light on the display screen with images on it. In other display devices, the display screen is covered with such a base material. Base materials with an anti-reflective film are to have high light transmittance and/or deformability to fit shapes of display devices.

Patent Literature 3 proposes a film with an anti-glare layer. Anti-glare layers generally contain microparticles with an average diameter of several microns dispersed in resin, and these microparticles cause light scattering, which prevents the reflection of outside light. The microparticles used in Patent Literature 3 are resin microparticles each having a single hollow space filled with transparent liquid. The liquid has a refractive index different from that of the shell of the microparticles.

In general anti-reflective films, hollow microparticles with an average particle diameter in the nano-range (e.g., 200 nm or less) are dispersed in resin. The anti-reflective films have a thickness of about 100 nm and reduce the reflectance by causing incident light and reflected light to interfere with each other and to cancel each other out. Such an anti-reflective film can be produced as follows. First, a mixture of UV-curable or thermosetting resin and hollow microparticles disposed in the resin is diluted with a volatile solvent such as isopropyl alcohol to prepare a composition. Next, the composition is applied to the surface of a substrate and then exposed to UV radiation or heat to cure the resin. Finally, the anti-reflective film is provided on the substrate to complete a base material.

The materials for the anti-reflective film and the substrate are selected such that the refractive index (n1) of the anti-reflective film, the refractive index (n2) of the substrate, and the thickness (d) of the anti-reflective film satisfy the Formulae 1 and 2 below.

$$n1 = (n2)^{1/2} \qquad \text{Formula 1}$$

$$n1 \times d = \lambda/4 \qquad \text{Formula 2}$$

In Formula 2, $\lambda$ is the wavelength of visible light (in the range from about 400 to 1000 nm). In general, $\lambda$ is set to 580 nm at which human eye has maximum sensitivity, but may alternatively be set to other wavelengths depending on the application of the display device.

If both the anti-reflective film and the substrate satisfy Formulae 1, 2 and are colorless and transparent, it is possible to make the reflectance zero on the surface of the anti-reflective film. Since it is, however, difficult to prepare materials that satisfy Formula 1, commercially available base materials with an anti-reflective film have a visible light reflectance of 1% or so.

Anti-reflective films, components of the anti-reflective films, substrates to mount the anti-reflective films thereon come with various types. For example, Patent Literature 4 proposes hollow microparticles suitable as a component of an anti-reflective film. Patent Literatures 5 and 6 disclose silica-based hollow microparticles used in an anti-reflective film.

Patent Literature 7 proposes a mesoporous silica film suitable as an anti-reflective film. Patent Literature 8 proposes an optical film suitable as a substrate to mount an anti-reflective film thereon.

Citation List

Patent Literature

PLT 1: Japanese Patent Unexamined Publication No. H04-030120
PLT 2: Japanese Patent Unexamined Publication No. 2000-56694
PLT 3: Japanese Patent Unexamined Publication No. 2009-229556
PLT 4: Japanese Patent Unexamined Publication No. 2008-110905
PLT 5: Japanese Patent Unexamined Publication No. 2001-233611
PLT 6: Japanese Patent Unexamined Publication No. 2004-203683
PLT 7: Japanese Patent Unexamined Publication No. 2012-25650
PLT 8: Japanese Patent Unexamined Publication No. 2008-208231

## SUMMARY OF THE DISCLOSURE

The present disclosure provides a composition of an optical film which enables fingerprints and other stains left on it to be unnoticeable or to be easily wiped off. The present disclosure further provides a base material including such an optical film as its outermost surface, and a molding including such a base material as its outermost surface.

A composition of an optical film in accordance with the present disclosure contains silica-based hollow microparticles, a matrix precursor, a nonvolatile liquid, and a volatile solvent. The nonvolatile liquid has a vapor pressure of 500 Pa or less and a boiling point of 250°C or higher. The volatile solvent is more volatile than the nonvolatile liquid. The content of the nonvolatile liquid is in the range from 0.1 to 30% by mass, inclusive, with respect to the sum mass of the silica-based hollow microparticles and the matrix precursor.

A base material in accordance with the present disclosure contains a base layer and an optical film on a surface of the base layer. The optical film contains silica-based hollow microparticles, a matrix, and a nonvolatile liquid having a vapor pressure of 500 Pa or less at 25°C and a boiling point of 250°C or higher. The content of the nonvolatile liquid is in the range from 0.1 to 30% by mass, inclusive, with respect to the sum mass of the silica-based hollow microparticles and the matrix.

A molding in accordance with the present disclosure includes a molded body and the above-mentioned base material coating at least a part of a surface of the molded body. The molded body is molded integrally with the base material.

In a method in accordance with the present disclosure for producing a molding, the above-described composition is applied to a surface of a substrate. The matrix precursor is a thermosetting resin. The volatile solvent is dried to form a dry film on the surface of the substrate. The substrate provided with the dry film is placed in a mold for resin molding in such a manner that the dry film is in contact with the mold. A resin is molded on the reverse surface of the substrate from the surface provided with the dry film so as to produce a molded body. The matrix precursor is not completely cured in the dry film and is completely cured when molding the resin so as to form a base material provided with the optical film onto a surface of the molded body.

The optical film made of the composition in accordance with the present disclosure enables fingerprints and other stains left on it to be unnoticeable or to be easily wired off. When the composition in accordance with the present disclosure contains a thermosetting resin as the matrix precursor, the composition applied to the surface of a substrate can be made into a dry film with the thermosetting resin incompletely cured. In this case, the optical film is completed when the incompletely cured resin is further heated until completely cured. A molded body may be formed integrally with a base material by, for example, insert molding on the reverse side of the substrate from the side provided with the dry film containing the incompletely cured resin. As a result, the optical film with no crack is completed (complete curing) concurrently with the insert molding process.

## BRIEF DESCRIPTION OF DRAWING

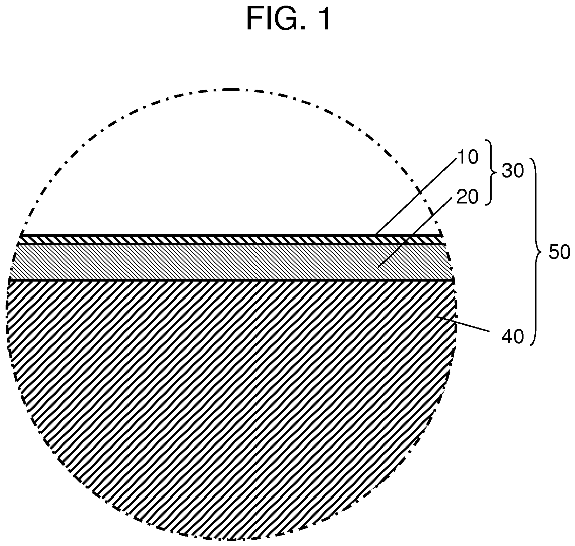

FIG. 1 is an enlarged schematic sectional view of a surface region of a molding in accordance with an exemplary embodiment of the present disclosure.

## DESCRIPTION OF EMBODIMENT

History Leading to the Exemplary Embodiment

Prior to describing the exemplary embodiment of the present disclosure, the history leading to the present disclosure will now be described in brief. Various methods have been developed to improve the easiness in wiping fingerprints and other stains off from anti-reflective films. One such method is to improve the water and oil repellency of resin used as a matrix; however, this method is not effective enough. Anti-reflective films have been carefully studied to understand why it is difficult to wipe fingerprints and other stains off from them. It has then turned out that silica-based hollow microparticles present at the surface region of an anti-reflective film have spaces between them, and stains get into the spaces and cannot be wiped out of them. One possible reason for the occurrence of the spaces is that the amount of the matrix precursor in the composition is too small to cover all the silica-based hollow microparticles in the completed film. Another possible reason is as follows. The matrix precursor causes, for example, a condensation reaction when cured, and generates a compound (e.g., water) that is not a component of the matrix. The matrix is reduced by the amount corresponding to the generation of the compound.

These findings indicate as follows. If spaces are generated between the microparticles when an anti-reflective film is being made from a composition containing a component with some fluidity, the spaces are filled with the fluid component, making it easier to wipe stains off. If the fluid component is nonvolatile liquid that is not volatilized by heat or UV radiation to be applied during the film formation, it becomes easier to wipe stains off of the film.

The issue of wiping stains off tends to occur when a thermosetting resin is used as the matrix precursor probably for the following reason. The condensation reaction or other reactions possibly occurring during the curing process causes a thermosetting resin usable as the matrix precursor of the anti-reflective film to generate a component (e.g., water) that is not a component of the matrix resin. Meanwhile, when a UV curable resin is used as the matrix precursor, stains can be relatively easily wiped off. The reason for this is considered that when the UV curable resin is cured, an addition reaction occurs, which prevents the generation of a compound that is not a component of the matrix. Therefore, as far as the ease of stain removal is concerned, it is preferable to use addition-reaction type UV curable resins as the matrix precursor.

However, anti-reflective films tend to be hard when made from a composition containing a UV curable resin as the matrix precursor. Therefore, if a resin layer is, for example, injection-molded on the reverse side of the base material from the side provided with an anti-reflective film while the base material is bent or curved to fit the shape of the display device, the anti-reflective film is likely to develop cracks. For this reason, base materials including an anti-reflective film containing a UV curable resin matrix are only suitable for flat applications.

If a composition containing a thermosetting resin as the matrix precursor is applied to a base material to produce an anti-reflective film, the resin can be left incompletely cured. When the resin is incompletely cured, the film is relatively deformable. Therefore, the base material provided with the anti-reflective film is bent or curved while the resin is left incompletely cured, and the resin layer is formed on the rear side of the base material by, for example, injection molding. This reduces the development of cracks in the anti-reflective film. The thermosetting resin in the anti-reflective film can be completely cured concurrently with or after the formation of the resin layer on the reverse side. As described above, when cured, many thermosetting resins generate a compound that is not a component of the matrix. Therefore, these resins do not have enough property to wipe stains off. Meanwhile, as described above, a composition containing a nonvolatile liquid improves this property.

The following is a detailed description of a composition of an anti-reflective film, and a base material and a molding each including the anti-reflective film in accordance with the exemplary embodiment of the present disclosure. In the following description, the composition of the anti-reflective film may be referred to as the "anti-reflective film composition" or simply as the "composition". The base material including the anti-reflective film may be referred to as the "anti-reflective base material", and the molding including the anti-reflective film may be referred to as the "anti-reflective molding". Also, the description of well-known matter and of substantially the same configuration as described earlier may be omitted to avoid redundancy and help those skilled in the art understand them easily.

FIG. 1 is an enlarged schematic sectional view of a surface region of anti-reflective molding 50 in accordance with the exemplary embodiment of the present disclosure. Hereinafter, anti-reflective molding 50 may be referred to as molding 50, which includes molded body 40 and anti-reflective base material 30. Hereinafter, molded body 40 may be referred to as body 40, and anti-reflective base material 30 as base material 30. Base material 30 coats at least a part of the surface of body 40. Body 40 is molded integrally with base material 30. Base material 30 includes base layer 20 and anti-reflective film 10 provided on a surface of base layer 20. Anti-reflective film 10 may be hereinafter referred to as film 10. Film 10 contains silica-based hollow microparticles, a matrix, and a nonvolatile liquid. The nonvolatile liquid has a vapor pressure of not more than 500 Pa at 25°C and a boiling point of not lower than 250°C. The content of the nonvolatile liquid is in the range from 0.1% to 30% by mass, inclusive, of the sum of the silica-based hollow microparticles and the matrix.

First, the composition for preparing anti-reflective film 10 will be described as follows.

**Anti-Reflective Film Composition**

The anti-reflective film composition contains silica-based hollow microparticles, a matrix precursor, a volatile solvent, and a nonvolatile liquid, each of which will be described in turn as follows.

Silica-Based Hollow Microparticles

The silica-based hollow microparticles can be any kind that is used in an anti-reflective film, such as those microparticles disclosed in Patent Literatures 5 and 6.

The silica-based hollow microparticles have, for example, an average diameter in the range from 5 to 200 nm and a refractive index in the range from 1.1 to 1.4. If the average particle diameter is too small, the microparticles cannot have a hollow space large enough and their thickness cannot be thin enough. This makes it difficult for the microparticles to have a refractive index of not more than 1.4, and hence to produce an anti-reflective effect. Meanwhile, if the average particle diameter is too large, film 10 may have a thickness larger than the value used to produce an optical interference effect. This may cause the haze value to be high, or the abrasion and scratch resistance to be insufficient.

The composition may contain two or more kinds of silica-based hollow microparticles different in average diameter. For example, the composition may contain hollow microparticles A with an average diameter in the range from 60 to 200 nm, and hollow microparticles B with an average diameter in the range from 5 to 60 nm. In this case, the average diameter of microparticles A is larger than that of microparticles B. When the microparticles A and B are used together, smaller microparticles B get into the spaces between larger microparticles A. This makes the anti-reflective film densely packed with the microparticles A and B.

The silica-based hollow microparticles can be produced as follows. First, composite oxide microparticles of silica and an inorganic oxide other than silica are used as nuclei, and a silica coating layer (1) is formed when necessary. Next, the inorganic oxide other than silica is removed, and a silica coating layer (2) is formed when necessary. The resulting microparticles are hydrothermally treated at a high temperature when necessary. In this case, the average diameter of the microparticles used as nuclei (core particles) can be adjusted to control the average diameter of the resulting hollow microparticles. For example, assume that the core particles with an average diameter in the range from 4 to 55 nm are coated with the silica coating layers (1) and (2) whose total thickness is approximately in the range from 1 to 5 nm. In this case, the hollow microparticles have an average diameter in the range from 5 to 60 nm. Alternatively, assume that the core particles with an average diameter approximately in the range from 59 to 190 nm are coated with the silica coating layers (1) and (2) whose total thickness is approximately in the range from 1 to 10 nm. In this case, the hollow microparticles have an average diameter in the range from 60 to 200 nm.

This is an example method for producing silica-based hollow microparticles and is not the only method that can be used.

It is preferable that the silica-based hollow microparticles are surface-treated with any of organic silicon compounds shown in Formula (A) below and their hydrolysates.

$$R_n\text{-}SiX_{4-n} \qquad \text{Formula (A)}$$

where R is an unsubstituted or substituted hydrocarbon group each having 1 to 10 carbon atoms and may be either identical or different from each other; X is an alkoxy group having 1 to 4 carbon atoms, a silanol group, a halogen, or a hydrogen; and n is an integer from 0 to 3.

Examples of the organic silicon compounds expressed by Formula (A) include the following: tetramethoxysilane, tetraethoxysilane, tetrapropoxysilane, tetrabutoxysilane, methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, isobutyltrimethoxysilane, vinyltrimethoxysilane, vinyltriethoxysilane, vinyl tris($\beta$-methoxyethoxy)silane, 3,3,3-trifluoropropyltrimethoxysilane, methyl-3,3,3-trifluoropropyl dimethoxysilane, $\beta$-(3,4-epoxycyclohexyl)ethyltrimethoxysilane, $\gamma$-glycidoxymethyltrimethoxysilane, $\gamma$-glycidoxymethyltriethoxysilane, $\gamma$-glycidoxyethyltrimethoxysilane, $\gamma$-glycidoxyethyltriethoxysilane, $\gamma$-glycidoxypropyltrimethoxysilane, $\gamma$-glycidoxypropyltrimethoxysilane, $\gamma$-glycidoxypropyltriethoxysilane, $\gamma$-glycidoxypropyltriethoxysilane, $\gamma$-($\beta$-glycidoxyethoxy)propyltrimethoxysilane, $\gamma$-(meth)acryloxymethyltrimethoxysilane, $\gamma$-(meth)acryloxymethyltriethoxysilane, $\gamma$-(meth)acryloxymethyltrimethoxysilane, $\gamma$-(meth)acryloxyethyltriethoxysilane, $\gamma$-(meth)acryloxyethyltrimethoxysilane, $\gamma$-(meth)acryloxyethyltrimethoxysilane, $\gamma$-(meth)acryloxypropyltriethoxysilane, $\gamma$-(meth)acryloxypropyltriethoxysilane, butyltrimethoxysilane, isobutyltriethoxysilane, hexyltriethoxysilane, octyltriethoxysilane, decyltriethoxysilane, butyltriethoxysilane, isobutyltriethoxysilane, hexyltriethoxysilane, octyltriethoxysilane, decyltriethoxysilane, 3-ureidoisopropylpropyltriethoxysilane, perfluorooctylethyltrimethoxysilane, perfluorooctylethyltriethoxysilane, perfluorooctylethyltriisopropoxysilane, trifluoropropyltrimethoxysilane, N-$\beta$(aminoethyl) $\gamma$-aminopropylmethyldimethoxysilane, N-$\beta$(aminoethyl)$\gamma$-aminopropyltrimethoxysilane, N-phenyl-$\gamma$-aminopropyltrimethoxysilane, $\gamma$-mercaptopropyltrimethoxysilane, trimethylsilanol, and methyltrichlorosilane.

The silica-based hollow microparticles surface-treated with such an organic silicon compound are uniformly dispersed and densely packed in the composition. As a result, the coat (film 10) to be obtained is strong, abrasion-resistant, and transparent.

The surface treatment can be applied to the silica-based hollow microparticles as follows. First, a certain amount of any of the above-mentioned organic silicon compounds is added to a dispersion liquid containing microparticles dispersed in alcohol. Next, water is added to the dispersion liquid, and either acid or alkali is added as a catalyst for hydrolysis when necessary, thereby hydrolyzing the organic silicon compound.

The mass ratio of the organic silicon compound with respect to the silica-based hollow microparticles (the mass of the solid content of the organic silicon compound/the mass of the silica-based hollow microparticles) is in the range from 0.005 to 1.0, and preferably in the range from 0.01 to 0.3 although the ratio depends on the average diameter of the microparticles. If the mass ratio is small, the amount of the organic silicon compound is too small to be affinitive with the other components such as an after-mentioned matrix precursor. As a result, the microparticles may not be well dispersed or stabilized in the composition. This may cause the microparticles to aggregate in the composition, failing to achieve a dense anti-reflective film. Moreover, film 10 may be poor in strength, abrasion resistance, and adhesion with a substrate (base layer 20) on which film 10 is provided. Meanwhile, if the mass ratio is larger than the above range, the dispersibility of the microparticles in the composition does not increase any more, and the refractive index of the microparticles increases with the amount of the organic silicon compound. As a result, the obtained anti-reflective film does not have a refractive index as low as desired, possibly deteriorating in anti-reflective performance.

Matrix Precursor

The matrix precursor turns into a matrix in anti-reflective film 10 when completed. The matrix serves as a bond between the silica-based hollow microparticles. The matrix precursor may differ in state from the matrix and change in state and/or property during the formation of film 10. Alternatively, the matrix precursor may keep its state and/or physical property after it turns into a matrix in film 10. The matrix precursor helps the composition to be applied entirely (with no break or discontinuity) to the substrate, which is to be base layer 20. For this reason, the matrix precursor can be called a "coating-forming component".

Examples of the matrix in film 10 include silicone-based (sol-gel-based) components and organic resins. Therefore, the matrix precursor can be made of a material that forms such a matrix in film 10.

If the matrix is made of a silicone-based component, the matrix precursor can be, for example, an organic silicon compound expressed by Formula (A). In this case, the obtained matrix is a hydrolysate or hydrolyzed polycondensate of the organic silicon compound.

If the matrix is made of an organic resin, the matrix precursor can be a well-known curable resin for paint (including thermosetting, UV curable, and electron-beam curable resins) or thermoplastic resin.

Examples of the thermoplastic resin usable as the matrix precursor include the following: polyester resin, polycarbonate resin, polyamide resin, polyphenylene oxide resin, thermoplastic acrylic resin, vinyl chloride resin, fluorine resin, vinyl acetate resin, and silicone rubber. Examples of the curable resin include the following: urethane resin, melamine resin, silicon resin, butyral resin, reactive silicone resin, phenol resin, epoxy resin, unsaturated polyester resin, thermosetting acrylic resin, and UV curable acrylic resin. Alternatively, the matrix precursor can be a copolymer of two or more selected from these resins, or a modified form of these resins. In addition, these resins may be emulsion resins, water-soluble resins, or hydrophilic resins.

The curable resin can be thermosetting, UV curable, or electron-beam curable. In the case of using a matrix precursor made of a curable resin, the composition may contain a curing catalyst (polymerization initiator), and the matrix precursor is generally in the state of a primer (monomer) or a prepolymer, which has not yet been cured.

Curable resins are transformed into a polymer and/or a network structure. The polymer is formed by an addition reaction, a condensation reaction, or an addition condensation reaction, and the network structure is formed by a cross-linking reaction. If a curable resin that causes a condensation reaction is used as the matrix precursor, this reaction produces a compound that is not a component of the matrix resin as described earlier. As a result, the silica-based hollow microparticles have spaces between them, which make it difficult to wipe stains out. In the present exemplary embodiment, however, the nonvolatile liquid fills in these spaces. The effects of the present exemplary embodiment are remarkable in such a case.

It is preferable that the matrix precursor is made of a material that turns into a matrix showing a refractive index in the range from 1.3 to 1.49, inclusive, together with the silica-based hollow microparticles in anti-reflective film 10. When the mixture of the matrix and the silica-based hollow microparticles has a refractive index in this range, the matrix and the microparticles contribute to the formation of film 10 with excellent anti-reflective properties.

Volatile Solvent

The volatile solvent makes the composition fluid enough to be applied, by an ordinary coating method, to a surface of the substrate, which is to be base layer 20. The volatile solvent is capable of vaporizing during the formation of film 10; dissolving or dispersing the matrix precursor and the nonvolatile liquid as well as the polymerization initiator and other additives used depending on the application; and uniformly dispersing the silica-based hollow microparticles. In short, the volatile solvent is more volatile than the nonvolatile liquid. The volatile solvent can be any well-known solvent that has these properties. The volatile solvent is preferably a polar solvent.

Examples of the volatile solvent include water, alcohols, ethers, ketones, alkyl cellosolves, toluene, cyclohexanone, and isophorone. Examples of the alcohols include the following: methanol, ethanol, propanol, 2-propanol (IPA), butanol, diacetone alcohol, furfuryl alcohol, tetrahydrofurfuryl alcohol, methylene glycol, ethylene glycol, hexylene glycol, isopropyl glycol, tetrafluoropropanol, and octafluoropropanol. Examples of the ethers include esters such as methyl ester acetate, ethyl ester acetate, and butyl acetate; diethyl ether, ethylene glycol monomethyl ether, ethylene glycol monoethyl ether, ethylene glycol monobutyl ether, diethylene glycol monomethyl ether, diethylene glycol monoethyl ether, and propylene glycol monomethyl ether. Examples of the ketones include acetone, methyl ethyl ketone, methyl isobutyl ketone, acetylacetone, and acetoacetate ester. Examples of the alkyl cellosolves include methyl cellosolve, ethyl cellosolve, and butyl cellosolve.

In the case of diluting the nonvolatile liquid with a solvent and adding it to the composition, the solvent can be any of the above-listed examples or a low polar solvent such as n-hexane, n-heptane, and hydrofluoroether.

Nonvolatile Liquid

The nonvolatile liquid serves to fill in the spaces between the silica-based hollow microparticles in anti-reflective film 10. Therefore, the liquid remains in the finished film 10 without being evaporated or decomposed during the formation of film 10. The nonvolatile liquid is preferably a compound with a molecular weight of not less than 280, and satisfies the following two conditions: (1) having a vapor pressure of not more than 500 Pa at 25°C, and (2) having a boiling point of not less than 250°C at 1013 hPa (1 atm).

Liquid with such a low vapor pressure and a high boiling point is unlikely to evaporate during the formation of film 10 or the molding of molding 50. If a liquid has a vapor pressure of not more than 500 Pa at 25°C when measured by one of well-known methods, it can be preferably used as the nonvolatile liquid in the present exemplary embodiment.

It is further preferable that the nonvolatile liquid satisfies at least one of the following conditions:

(3) having a viscosity of not more than 1 Pa·s at 23°C, which indicates excellent fluidity. The viscosity is measured with, for example, a Brookfield viscometer (Tokyo Keiki Inc., model BM);
(4) being water repellent, which prevents sweat stains stuck to the surface of film 10 from permeating into film 10 and allows the stains to be easily wiped off because sweat stains are mainly composed of water;
(5) being colorless and transparent, which is unlikely to affect the anti-reflective function of film 10;
(6) having a low refractive index, preferably not more than 1.5, which is unlikely to affect the anti-reflective function of film 10; and
(7) having a refractive index close to the refractive indexes of the silica-based hollow microparticles and the matrix. For example, the difference between the refractive index of the nonvolatile liquid and the refractive index of the mixture of the silica-based hollow microparticles and the matrix is not more than 0.08.

Examples of the nonvolatile liquid that satisfies any of the above-listed conditions include hydrocarbons such as liquid paraffins, mineral oils, white spindle oils, and ethers. Saturated hydrocarbons such as liquid paraffins preferably have 20 or more carbon atoms. Other examples of the nonvolatile liquid include silicone compounds such as silicone oils, fluorine compounds, and mixtures of two or more of these liquids. Furthermore, the nonvolatile liquid may be hydrophilic to prevent anti-reflective film 10 from misting over. One example is a hydrophilic coating material (e.g., WG-R1 manufactured by Marusho Sangyo. Co., Ltd.). A hydrophilic nonvolatile liquid is suitable in an anti-reflective film used in applications that are not subjected to water stains (especially, sweat), such as the display device of an outdoor surveillance camera.

Other Additives

The anti-reflective film composition may contain a polymerization initiator when the matrix precursor is made of a curable resin as described above. The composition may contain one or more additives selected from leveling agents, thixotropy agents, antistatic agents, and others when necessary.

Preparation of Anti-Reflective Film Composition

The anti-reflective film composition is prepared by mixing the above-described components. The composition contains at least the following components: the silica-based hollow microparticles, the matrix precursor, the volatile solvent, and the nonvolatile liquid. Of these, the microparticles and the matrix precursor are converted into solid content when film 10 is completed, and their combined concentrations are hereinafter referred to as the "solid content concentration" for convenience of explanation. In the composition, the solid content concentration is preferably in the range from 1 to 50% by mass, inclusive, of the whole composition. The content of the nonvolatile liquid is in the range from 0.1 to 30 parts by mass, inclusive, per 100 parts by mass of the solid content.

If the content of the solid content concentration is too low, anti-reflective film 10 may not have a desired thickness or sufficient anti-reflective performance. Meanwhile, if the content of the solid content concentration is too high, the composition is too viscous to be well coated or to be stable. As a result, obtained film 10 may be poor in adhesion, strength, and other properties.

If the content of the nonvolatile liquid is less than 0.1 parts by mass of the solid content, it is difficult to wipe stains off. If the content of the nonvolatile liquid exceeds 30 parts by mass, film 10 is not very adhesive with base layer 20 and also has a high refractive index. More specifically, if the content of the nonvolatile liquid is too high, the liquid exceeds in volume the spaces between the hollow microparticles, resulting in the formation of a liquid layer. As a result, film 10 is unlikely to have a thickness that satisfies Formula 2 shown above, and has a low anti-reflective function. The ratio of the nonvolatile liquid with respect to the solid content is more preferably in the range from 0.5 to 25 parts by mass, inclusive, and further preferably in the range from 1 to 20% parts by mass, inclusive. The upper limit of the nonvolatile liquid content may be 10 parts by mass.

Alternatively, the nonvolatile liquid content may be determined according to the volume of the solid content. It is preferable that the nonvolatile liquid is 0.2 to 0.3 times, inclusive, in volume with respect to the solid content in the composition. When the nonvolatile liquid content is too high, the adhesion between base layer 20 and film 10 is low even if the volume content of the particles is appropriate.

It is preferable that the proportion of the silica-based hollow microparticles in the solid content in the composition is 1 to 50% by mass. If the proportion of the microparticles is too low, the proportion of the resin in film 10 is high, making the refractive index large. This may reduce the anti-reflective function of film 10. Meanwhile, if the proportion of the silica-based hollow microparticles is too high, the proportion of the resin is low. This causes the contact area between the resin and base layer 20 to be small, making film 10 less adhesive with base layer 20.

The anti-reflective film composition can be prepared by mixing the components, preferably, by mixing the following components: a dispersion liquid containing silica hollow microparticles dispersed in a volatile solvent; a dispersion liquid (or solution) containing a matrix precursor dispersed (or dissolved) in a volatile solvent; and a diluted solution containing a nonvolatile liquid diluted with a volatile solvent. The volatile solvents used for these components can be the same or different from each other. When two or more dispersion liquids (or solutions) are mixed, the concentration of each dispersion liquid is adjusted in such a manner that the solid content concentration is in the range from 1 to 50% by mass in the completed composition.

Another possible method for preparing the anti-reflective film composition in accordance with the present exemplary embodiment is as follows. A nonvolatile liquid or a nonvolatile liquid diluted with a solvent is added to a commercially available composition that contains silica-based hollow microparticles, a matrix precursor (preferably, curable resin), and a volatile solvent. One such commercially available composition is ELCOM MA-1021SIC manufactured by JGC Catalysts and Chemicals Ltd.

**Anti-Reflective Base Material**

Anti-reflective base material 30 includes the substrate and anti-reflective film 10 provided on a surface of the substrate. Film 10 is prepared by applying the above-described anti-reflective film composition to the surface of the substrate and then evaporating, mainly, the volatile solvent and solidifying or curing the matrix precursor.

Base layer 20 is, for example, a sheet, film, or plate that is made from a material with a high transmittance and transparency of visible light. Base layer 20 may have a three-dimensional shape depending on the applications.

Examples of the material of base layer 20 include polyester-based polymers such as polyethylene terephthalate and polyethylene naphthalate; cellulose-based polymers, polycarbonate-base polymers, and acrylic-based polymers. These resins may be used alone or in combination of two or more of them. Base layer 20 may be a laminated body. In the case of attaching anti-reflective base material 30 to another member, it is possible to provide an adhesive layer (not shown) on the reverse side of base layer 20 from the side provided with film 10 in order to improve the adhesion between base material 30 and the member. The adhesive layer can be made from any material that has a high visible-light transparency.

It is preferable that base layer 20 shows a refractive index of not less than 1.4 measured at the side thereof which is provided with film 10. It is also preferable that base layer 20 has a visible-light transmittance of not less than 90% and a haze value of not more than 1%.

Base layer 20 may have a thickness of, for example, not more than 500 $\mu$m. When the thickness exceeds 500 $\mu$m, the visible-light transmittance tends to decrease. When base layer 20 has a large thickness, it is difficult to roll up base material 30.

In anti-reflective film 10, the volatile solvent evaporates from the composition applied to the surface of base layer 20 and the matrix precursor is solidified or cured to form a matrix. Also in film 10, the silica-based hollow microparticles are dispersed in the matrix, and the spaces between the microparticles are filled with the nonvolatile liquid.

It is preferable that the refractive index n1 of film 10 and the refractive index n2 of base layer 20 satisfy the above-mentioned Formula 1. If the matrix of film 10 has a high refractive index n1, and base layer 20 has a low refractive index n2, then n1 is much larger than the square root of n2. In such a case, the anti-reflective function can be secured by forming a layer with a high refractive index on base layer 20, and then providing film 10 on the surface of the layer.

Thickness of film 10 is designed according to its refractive index so as to satisfy the above-mentioned Formula 2. The thickness of film 10 can be, for example, in the range from 50 to 200 nm.

In anti-reflective base material 30, it is preferable that a mixture of the silica-based hollow microparticles and the matrix has a refractive index in the range from 1.3 to 1.49, inclusive. It is also preferable that the nonvolatile liquid has the same refractive index as the above-mentioned refractive index of the mixture of the microparticles and the matrix or that the difference between the two indexes is not more than 0.08. The refractive index of the mixture of the silica-based hollow microparticles and the matrix can be found out as follows. An anti-reflective film composition not containing a nonvolatile liquid is produced, and the matrix precursor is solidified or cured. The refractive index of the solid is measured. If the difference is large between the refractive index of the nonvolatile liquid and the refractive index of the mixture of the microparticles and the matrix, the anti-reflective function may be insufficient.

Anti-reflective base material 30 can be prepared by a method involving the following processes: applying an anti-reflective film composition to a surface of the substrate, which is to be base layer 20; evaporating the volatile solvent in the composition; and solidifying or curing the matrix precursor. The composition may be applied to the surface of the substrate, using well-known coating techniques such as spin coating, bar coating, spray coating, or gravure coating. The coating thickness of the composition is determined to achieve a desired thickness when the volatile solvent is evaporated and the matrix precursor is solidified or cured.

The solvent is evaporated by drying the coated composition. Most of the evaporating solvent is a volatile solvent. The drying process is performed preferably at a temperature not to damage base layer 20, for example, in the range from 0 to 80°C, preferably in the range from 0 to 70°C, and further preferably at 40°C. The drying process is continued until the volatile solvent evaporates at a selected temperature. For example, when the drying temperature is in the range from 0 to 60°C, the drying time can be in the range from 10 to 30 hours, for example, 24 hours. After the drying process, a protective film may be applied to anti-reflective film 10 if necessary.

Concurrently with or after the drying process, the matrix precursor is solidified or cured into a matrix. If the matrix precursor is made of a thermoplastic resin and is dissolved or dispersed in a volatile solvent of the composition, the volatile solvent is evaporated to solidify the matrix precursor. Meanwhile, if the matrix precursor is made of a curable resin, the volatile solvent is evaporated and then the curable resin is cured into a matrix by exposing it to heat, light (especially, UV light), or electron beam.

When the matrix precursor is made of a thermosetting resin, the resin may be semi-cured (called B-stage) instead of being cured completely. In this case, as described later, the thermosetting resin can be completely cured when molded body 40 is formed on the rear side of anti-reflective base material 30 (the side not provided with film 10) by, for example, injection molding.

The thermosetting resin can be made substantially illiquid enough to be fixed to base layer 20, although not cured completely, by being subjected to a drying process to evaporate the solvent, or then further subjected to a heating process. The film with the thermosetting resin in this state may be hereinafter referred to as a dry film for the convenience of explanation. Considering that the dry film prepared in the drying process is to be completely cured in the high-temperature process that follows the drying process, it is preferable to prevent base layer 20 provided with the anti-reflective film composition from being left too long in a high-temperature environment and being damaged. For example, the drying process to prepare the dry film may be performed at a temperature from 0 to 60°C for about 10 to 30 hours.

The dry film described so far is formed using a thermosetting resin as the matrix precursor, but the matrix precursor may alternatively be made of other curing type of resins.

In the above description, anti-reflective film 10 is prepared using an anti-reflective film composition containing a nonvolatile liquid. Another possible method for preparing film 10 is as follows. A composition that contains silica-based hollow microparticles and a matrix precursor and does not contain a nonvolatile liquid is used to provide a precursor film of anti-reflective film 10 on the surface of base layer 20. Next, a nonvolatile liquid is applied to the precursor film. In this case, the nonvolatile liquid can be applied to the precursor film either directly (as it is) or in the form of a solution diluted with a solvent or a dispersion liquid. The application can be performed using, for example, spin coating, bar coating, spray coating, or gravure coating. After this, the solvent used to dilute the nonvolatile liquid is evaporated by the drying process.

In anti-reflective base material 30, the following materials may be interposed between anti-reflective film 10 and base layer 20 when necessary: an adhesive, a film made of material with a high refractive index, a hard coat film, an antistatic film, or the like.

Anti-reflective base material 30 may be pasted on a display device or on the display screen surface of a device equipped with a display device (or a display unit). Examples of the display device include mobile phones, tablet terminals, car navigations, security cameras (display unit), mirrors, watches (display unit), digital calendars (display unit), and electronic message boards.

**Anti-Reflective Molding**

Anti-reflective molding 50 includes above-described anti-reflective base material 30 and molded body 40. At least part of the surface of body 40 is covered with base material 30, and body 40 is molded integrally with base material 30. Body 40 can be formed of the following thermoplastic resins: polyolefin resin, polyester resin, polycarbonate resin, polyamide resin, polyphenylene oxide resin, thermoplastic acrylic resin, vinyl chloride resin, fluorine resin, vinyl acetate resin, silicone rubber, and the like. Body 40 may alternatively be made of a thermosetting resin such as urethane resin, melamine resin, silicon resin, butyral resin, reactive silicone resin, phenol resin, epoxy resin, unsaturated polyester resin, or thermosetting acrylic resin.

Body 40 can be prepared, for example, by a method as follows. First, base material 30 is placed in a mold with film 10 being in contact with the mold. Next, molten resin is injected to the reverse side of material 30 from the side provided with film 10, and then the resin is cured in the mold. With this method, body 40 is molded integrally with base material 30 as the underlying layer of base material 30. This molding method may be referred to as insert molding.

In insert molding, base material 30 may be bent or curved to fit the shape of the mold. This can cause film 10 to develop cracks at its bent or curved portion because the matrix is too hard to transform film 10.

This inconvenience is avoided by performing insert molding as follows. First, thermosetting resin is used as the matrix precursor of the anti-reflective film composition. Next, the composition is applied to a surface of base layer 20 and subjected to a heating process to make the thermosetting resin incompletely cured. The resulting intermediate is used in insert molding.

The incompletely cured thermosetting resin has the property of becoming fluid when heated and then being completely cured. Therefore, the resin is completely cured during insert molding by the heat of the molten resin or the heated mold, and at the same time, the molten resin is molded. This results in the preparation of anti-reflective molding 50 including anti-reflective film 10 while cracks are prevented from being generated.

Molding 50 may be used in the display screen of a car navigation, especially a frameless car navigation to be embedded in a dashboard. Alternatively, molding 50 may be used as an antifouling, scratch-resistant rigid cover used in the display screen of a mobile phone, a tablet terminal, or other similar devices. Molding 50 can be, for example, provided with a flange because film 10 never develops cracks at the bent portion, if any, of molding 50.

Anti-reflective film 10, which is provided on a surface of base layer 20 (substrate) in the above description, may alternatively be used as a different type of optical film such as a light-transmitting film.

**Examples**

The present disclosure will now be described in detail in the following examples, but is not limited to these examples.

**Example 1**

A colorless transparent PET base material (Lumirror U34 manufactured by Toray Industries, Inc.) is prepared as the substrate.

ELCOM MA-1021 SIC manufactured by JGC Catalysts and Chemicals Ltd. is prepared as the thermosetting resin composition that contains silica-based hollow microparticles, a thermosetting resin, and a volatile solvent. A plurality of kinds of anti-reflective film compositions are prepared by adding each of the following nonvolatile liquids (1) to (5) separately to the composition.

(1) mineral oil (Baby Oil manufactured by Johnson & Johnson) with a vapor pressure of less than the detection limit at 25°C, a boiling point of not lower than 250°C, a refractive index of about 1.46, and a viscosity of 0.6 Pa·s at 23°C;
(2) refined white spindle oil (product number 035 manufactured by AZ Co., Ltd.) with a vapor pressure of less than the detection limit at 25°C, a boiling point of not lower than 250°C, and a refractive index of about 1.46;
(3) a fluorine compound (FS-2050 manufactured by Fluoro Technology Co., Ltd.) with a vapor pressure of less than the detection limit at 25°C, a boiling point of not lower than 250°C, and a refractive index of about 1.4;
(4) a mixture of petroleum-derived hydrocarbon and a fluorine compound (a nonvolatile residue in waterproof antifouling spray, DBS-420 manufactured by Henkel Japan Ltd.) with a vapor pressure of less than the detection limit at 25°C, a boiling point of not lower than 250°C, and a refractive index of about 1.46; and

(5) silicone oil (KF-50 manufactured by Shin-Etsu Chemical Co., Ltd.) with a vapor pressure of less than the detection limit at 25°C, a boiling point of not lower than 250°C, and a refractive index of about 1.46.

In the above description, the term "less than the detection limit" concerning a vapor pressure at 25°C means that the vapor pressure is too low to be measured as a numerical value with a vapor pressure meter. However, a vapor pressure of less than the detection limit may be shown as zero on a data sheet. The viscosity values are measured with a Brookfield viscometer (model: BM manufactured by Tokyo Keiki Inc.).

Each of the nonvolatile liquids (1) to (5) is added in the range from 0.1 to 30 parts by mass, inclusive, per 100 parts by mass of the solid content of the thermosetting resin composition. Before addition, the nonvolatile liquids are diluted with isopropanol to facilitate the formation of an anti-reflective film with a thickness of about 100 nm. Each composition containing the corresponding nonvolatile liquid is applied to a PET base material after adjusting the concentration of the solid content of the composition in such a manner that the resultant film has a thickness satisfying the Formula 2 when dried. The coated film is subjected to a drying process at 60°C for 24 hours to evaporate the volatile solvent. The resulting dry film is heated at 120°C for 30 seconds to cure the thermosetting resin. As a result, an anti-reflective film, and hence, an anti-reflective base material are produced.

**Example 2**

As the substrate, a colorless transparent base material is used, which is an acrylic polycarbonate resin film (NJ-5100 manufactured by Teijin Limited), and is hereinafter referred to as the APC film. A dry film is formed on a surface of the APC film, otherwise, in the same manner as in Example 1 until the drying process is completed. In the dry film, the thermosetting resin is not completely cured. The APC film provided with the dry film is put in a mold, and molten polycarbonate resin is injected to the rear side of the APC film (the side with no film). As a result, the molded body is integrally molded on the rear side of the APC film to complete the molding including the anti-reflective film. During the molding process, the APC film is deformed to fit the shape of the mold, and the thermosetting resin contained in the dry film is completely cured to achieve the anti-reflective film.

**Comparative Example 1**

Anti-reflective base materials are produced in the same manner as in Example 1 except that the following liquids (1) and (2) are used as the nonvolatile liquid.

(1) octafluorotoluene (CAS number: 434-64-0) with a refractive index of 1.368 and a boiling point of 104°C; and
(2) a fluorine compound (Novec HFE-7000 manufactured by 3M Company) with a refractive index of not more than 1.4 and a vapor pressure of 65 kPa at 25°C.

**Comparative Example 2**

An anti-reflective base material is produced in the same manner as in Example 1 except that mineral oil (Baby Oil manufactured by Johnson & Johnson) is used as the nonvolatile liquid and that the content of the oil is 0.05 parts by mass per 100 parts by mass of the solid content of the commercially available thermosetting resin composition. Another anti-reflective base material is produced in the same manner as in Example 1 except that mineral oil (Baby Oil manufactured by Johnson & Johnson) is used as the nonvolatile liquid and that the content of the oil is 40 parts by mass of per 100 parts by mass of the solid content of the commercially available thermosetting resin composition.

The anti-reflective base materials produced in the examples and comparative examples are evaluated. The results are shown in Table 1. The contents of the nonvolatile liquids in Examples 1 and 2 are shown in the case of 5 parts by mass only.

Reflectance

The reflectance is measured for light with wavelengths in the range from 400 to 1000 nm using a spectrometer (ETA manufactured by Steag). The reflectance values shown in Table 1 are the results of light with a wavelength of 580 nm.

Antifouling Property

The sticking property of fingerprint stains and ease of wiping them off are examined. A drop of sweat is placed on the tip of a finger, the fingertip is pressed against the anti-reflective film, and a fingerprint on the film is visually checked. The fingerprint on the film is wiped with a handkerchief, and the presence or absence of stain residue is visually checked. The ease of wiping off is evaluated under the following criteria.

OK: easily wiped off
NG: hard to be wiped

Scratch Resistance (Pencil Hardness)

Scratch hardness (pencil method) is evaluated according to JIS K 5600-5-4 (corresponding to ISO/DIS 15184 1996).

Film Adhesion

The adhesion of the anti-reflective film with the base layer is evaluated by the crosscut test using an adhesive cellophane tape. The film adhesion is evaluated under the following criteria.

OK: not exfoliated

NG: exfoliated

Appearance

The appearance of deformed portions of the molded anti-reflective base materials in Example 2 is observed to visually check the presence or absence of cracks. When no crack is observed visually, it is regarded as OK.

Table 1

| | Nonvolatile liquid | | Reflectance (%) | Antifouling Property | Pencil Hardness | Film Adhesion | Appearance |
|---|---|---|---|---|---|---|---|
| | Type | Content | | | | | |
| **Example 1** base material: PET | mineral oil | 5 | ≤ 1 | OK | 2H | OK | |
| | refined white spindle oil | 5 | ≤ 1 | OK | 2H | OK | |
| | fluorine compound | 5 | ≤ 1 | OK | 2H | OK | |
| | silicone oil KF-50 | 5 | ≤ 1 | OK | 2H | OK | |
| | petroleum-derived hydrocarbon and fluorine compound | 5 | ≤ 1 | OK | 2H | OK | |
| **Example 2** base material: acrylic | mineral oil | 5 | ≤ 1 | OK | 3H | OK | OK |
| | refined white spindle oil | 5 | ≤ 1 | OK | 3H | OK | OK |
| | fluorine compound | 5 | ≤ 1 | OK | 3H | OK | OK |
| | silicone oil KF-50 | 5 | ≤ 1 | OK | 3H | OK | OK |
| | petroleum-derived hydrocarbon and fluorine compound | 5 | ≤ 1 | OK | 3H | OK | OK |
| **Comparative Example 1** base material: PET | octafluorotoluene | 5 | ≤ 1 | NG | 2H | OK | |
| | HFE-7000 | 5 | ≤ 1 | NG | 2H | OK | |
| **Comparative Example 2** base material: PET | mineral oil | 0.05 | ≤ 1 | NG | 2H | OK | |
| | mineral oil | 40 | ≤ 1 | OK | 2H | NG | |

As shown in Table 1, the anti-reflective base materials in Example 1 and the anti-reflective moldings in Example 2 exhibit a reflectance of not more than 1% and are excellent in antifouling property, and film adhesion, and are large in pencil hardness. Meanwhile, in Comparative Example 1, the anti-reflective films produced by adding the volatile liquids to the commercially available thermosetting resin composition are excellent in reflectance but are poor in antifouling property. In Comparative Example 2, the anti-reflective base material, in which the content of the nonvolatile liquid is less than 0.1 parts by mass per 100 parts by mass of the solid content, is excellent in reflectance but is poor in antifouling property. On the other hand, the anti-reflective base material, in which the content of the nonvolatile liquid exceeds 30 parts by mass per 100 parts by mass of the solid content, is excellent in reflectance but is poor in adhesion of the anti-reflective film to the base material. The results of Example 2 indicate that using a thermosetting resin achieves an anti-reflective base material that does not develop cracks when deformed to fit the shape of the mold while an underlying layer is molded.

## INDUSTRIAL APPLICABILITY

The anti-reflective film made from a composition in accordance with the present disclosure has the ease of wiping stains off. When the matrix precursor is made of a thermosetting resin, the anti-reflective film is unlikely to develop cracks if deformed during the insert molding. For these reasons, the anti-reflective film can be used in display devices, which come in different shapes, of various electrical devices.

## REFERENCE MARKS IN THE DRAWING

- 10 anti-reflective film (film)
- 20 base layer
- 30 anti-reflective base material (base material)
- 40 molded body (body)
- 50 anti-reflective molding (molding)

## Claims

1. A composition of an optical film, comprising:

   silica-based hollow microparticles;
   a matrix precursor;
   a nonvolatile liquid; and
   a volatile solvent more volatile than the nonvolatile liquid,
   wherein the nonvolatile liquid has a vapor pressure of 500 Pa or smaller at 25°C and a boiling point of 250°C or higher, and
   a content of the nonvolatile liquid is in a range from 0.1 to 30 parts by mass, inclusive, per 100 parts by mass of a sum of the silica-based hollow microparticles and the matrix precursor.

2. The composition according to claim 1, wherein the nonvolatile liquid is at least one of a liquid paraffin, a fluorine compound, a silicone compound, and an ether compound.

3. The composition according to claim 1 or 2, wherein the nonvolatile liquid has a viscosity of 1 Pa·s or smaller at 23°C.

4. The composition according to any one of claims 1 to 3, wherein the matrix precursor is a thermosetting resin.

5. A base material comprising:

   a base layer; and
   an optical film on one of surfaces of the base layer, the optical film includsing:

      silica-based hollow microparticles;
      a matrix; and
      a nonvolatile liquid having a vapor pressure of 500 Pa or smaller at 25°C and a boiling point of 250°C or higher, a content of the nonvolatile liquid being in a range from 0.1 to 30 parts by mass, inclusive, per 100 parts by mass of a sum of the silica-based hollow microparticles and the matrix.

6. The base material according to claim 5, wherein the nonvolatile liquid is at least one of a liquid paraffin, a fluorine compound, a silicone compound, and an ether compound.

7. The base material according to claim 5 or 6, wherein the nonvolatile liquid has a viscosity of 1 Pa·s or smaller at 23°C.

8. The base material according to any one of claims 5 to 7, wherein the matrix is a cured thermosetting resin.

9. The base material according to any one of claims 5 to 8, wherein
a refractive index of a mixture of the silica-based hollow microparticles and the matrix is in a range from 1.3 to 1.49, inclusive, and
a difference between the refractive index of the mixture of the silica-based hollow microparticles and the matrix and a refractive index of the nonvolatile liquid is 0.08 or less.

10. A molding comprising:

a molded body; and
the base material according to claim 5 coating at least a part of a surface of the molded body,
wherein the molded body is molded integrally with the base material.

11. The molding according to claim 10, wherein the nonvolatile liquid is at least one of a liquid paraffin, a fluorine compound, a silicone compound, and an ether compound.

12. The molding according to claim 10 or 11, wherein the nonvolatile liquid has a viscosity of 1 Pa·s or smaller at 23°C.

13. The molding according to any one of claims 10 to 12, wherein the matrix is a cured thermosetting resin.

14. The molding according to any one of claims 10 to 13, wherein
a refractive index of a mixture of the silica-based hollow microparticles and the matrix is in a range from 1.3 to 1.49, inclusive, and
a difference between the refractive index of the mixture of the silica-based hollow microparticles and the matrix and a refractive index of the nonvolatile liquid is 0.08 or less.

15. A method for producing a molding, the method comprising:

applying a composition of an optical film to a first surface of a substrate, the composition comprising:

silica-based hollow microparticles;
a matrix precursor;
a nonvolatile liquid with a vapor pressure of 500 Pa or smaller at 25°C and a boiling point of 250°C or higher, a content of the nonvolatile liquid being is in a range from 0.1 to 30 parts by mass, inclusive, per 100 parts by mass of a sum of the silica-based hollow microparticles and the matrix precursor; and
a volatile solvent more volatile than the nonvolatile liquid, drying the volatile solvent to form a dry film on the first surface of the substrate;

placing the substrate provided with the dry film in a mold for resin molding in such a manner that the dry film is in contact with the mold; and
molding a resin on a second surface of the substrate so as to produce a molded body, the second surface being without the dry film,
wherein the matrix precursor is not completely cured in the dry film and is completely cured when molding the resin so as to form a base material provided with the optical film onto a surface of the molded body.

16. The method according to claim 15, wherein the matrix precursor is a thermosetting resin.

**Amended claims under Art. 19.1 PCT**

1.  A composition of an optical film, comprising:

    silica-based hollow microparticles;
    a matrix precursor;
    a nonvolatile liquid; and
    a volatile solvent more volatile than the nonvolatile liquid,
    wherein the nonvolatile liquid has a vapor pressure of 500 Pa or smaller at 25°C, a boiling point of 250°C or higher, and a refractive index in a range from 1.4 to 1.5, inclusive, and
    a content of the nonvolatile liquid is in a range from 5 to 30 parts by mass, inclusive, per 100 parts by mass of a sum of the silica-based hollow microparticles and the matrix precursor.

2.  The composition according to claim 1, wherein the nonvolatile liquid is at least one of a liquid paraffin, a fluorine compound, a silicone compound, and an ether compound.

3.  The composition according to claim 1 or 2, wherein the nonvolatile liquid has a viscosity of 1 Pa·s or smaller at 23°C.

4.  The composition according to any one of claims 1 to 3, wherein the matrix precursor is a thermosetting resin.

5.  A base material comprising:

    a base layer; and
    an optical film on one of surfaces of the base layer, the optical film including:

    silica-based hollow microparticles;
    a matrix; and
    a nonvolatile liquid having a vapor pressure of 500 Pa or smaller at 25°C, a boiling point of 250°C or higher, and a refractive index in a range from 1.4 to 1.5, inclusive, a content of the nonvolatile liquid being in a range from 5 to 30 parts by mass, inclusive, per 100 parts by mass of a sum of the silica-based hollow microparticles and the matrix.

6.  The base material according to claim 5, wherein the nonvolatile liquid is at least one of a liquid paraffin, a fluorine compound, a silicone compound, and an ether compound.

7.  The base material according to claim 5 or 6, wherein the nonvolatile liquid has a viscosity of 1 Pa·s or smaller at 23°C.

8.  The base material according to any one of claims 5 to 7, wherein the matrix is a cured thermosetting resin.

9.  The base material according to any one of claims 5 to 8, wherein
    a refractive index of a mixture of the silica-based hollow microparticles and the matrix is in a range from 1.3 to 1.49, inclusive, and
    a difference between the refractive index of the mixture of the silica-based hollow microparticles and the matrix and a refractive index of the nonvolatile liquid is 0.08 or less.

10. A molding comprising:

    a molded body; and
    the base material according to claim 5 coating at least a part of a surface of the molded body,
    wherein the molded body is molded integrally with the base material.

11. The molding according to claim 10, wherein the nonvolatile liquid is at least one of a liquid paraffin, a fluorine compound, a silicone compound, and an ether compound.

12. The molding according to claim 10 or 11, wherein the nonvolatile liquid has a viscosity of 1 Pa·s or smaller at 23°C.

13. The molding according to any one of claims 10 to 12, wherein the matrix is a cured thermosetting resin.

**14.** The molding according to any one of claims 10 to 13, wherein
a refractive index of a mixture of the silica-based hollow microparticles and the matrix is in a range from 1.3 to 1.49, inclusive, and
a difference between the refractive index of the mixture of the silica-based hollow microparticles and the matrix and a refractive index of the nonvolatile liquid is 0.08 or less.

**15.** A method for producing a molding, the method comprising:

applying a composition of an optical film to a first surface of a substrate, the composition comprising:

silica-based hollow microparticles;
a matrix precursor;
a nonvolatile liquid with a vapor pressure of 500 Pa or smaller at 25°C and a boiling point of 250°C or higher, a content of the nonvolatile liquid being is in a range from 0.1 to 30 parts by mass, inclusive, per 100 parts by mass of a sum of the silica-based hollow microparticles and the matrix precursor; and
a volatile solvent more volatile than the nonvolatile liquid, drying the volatile solvent to form a dry film on the first surface of the substrate;

placing the substrate provided with the dry film in a mold for resin molding in such a manner that the dry film is in contact with the mold; and
molding a resin on a second surface of the substrate so as to produce a molded body, the second surface being without the dry film,
wherein the matrix precursor is not completely cured in the dry film and is completely cured when molding the resin so as to form a base material provided with the optical film onto a surface of the molded body.

**16.** The method according to claim 15, wherein the matrix precursor is a thermosetting resin.

# FIG. 1

<div align="center">

**INTERNATIONAL SEARCH REPORT**

</div>

| International application No. |
|---|
| PCT/JP2016/003244 |

| A. CLASSIFICATION OF SUBJECT MATTER |
|---|
| *G02B1/111*(2015.01)i, *B32B27/20*(2006.01)i, *C08K7/26*(2006.01)i, *C08L101/00*(2006.01)i, *G02B1/18*(2015.01)i |

According to International Patent Classification (IPC) or to both national classification and IPC

| B. FIELDS SEARCHED |
|---|
| Minimum documentation searched (classification system followed by classification symbols) |
| G02B1/111, B32B27/20, C08K7/26, C08L101/00, G02B1/18 |

| Documentation searched other than minimum documentation to the extent that such documents are included in the fields searched |
|---|
| Jitsuyo Shinan Koho          1922-1996   Jitsuyo Shinan Toroku Koho   1996-2016 |
| Kokai Jitsuyo Shinan Koho    1971-2016   Toroku Jitsuyo Shinan Koho   1994-2016 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2007-17946 A (Konica Minolta Opto, Inc.), 25 January 2007 (25.01.2007), | 1-3,5-7, 10-12 |
| Y | (Family: none) | 4,8-9,13-16 |
| Y | JP 2004-258267 A (Matsushita Electric Works, Ltd.), 16 September 2004 (16.09.2004), paragraphs [0046] to [0049] (Family: none) | 4,8-9,13-14, 16 |
| Y | JP 2004-212619 A (Nakajima Industrial Co., Ltd.), 29 July 2004 (29.07.2004), paragraphs [0028], [0034], [0037], [0063] to [0065] (Family: none) | 15-16 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 September 2016 (29.09.16) | 11 October 2016 (11.10.16) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2016/003244 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Silicone Oil <KF-96> Seino Shiken Kekka, Shin-Etsu Chemical Co., Ltd. [online], 2014.05 [retrieval date 27 September 2016 (27.09.2016)] Internet:<URL: https://www.silicone.jp/catalog/ pdf/kf96_j.pdf>, page 2, page 15, fig. 11 | 1-16 |
| A | JP 2013-250504 A (Hitachi Chemical Co., Ltd.), 12 December 2013 (12.12.2013), entire text (Family: none) | 1-16 |
| A | JP 2000-9907 A (Fuji Photo Film Co., Ltd.), 14 January 2000 (14.01.2000), entire text; all drawings (Family: none) | 1-16 |
| A | JP 7-294706 A (Matsushita Electric Industrial Co., Ltd.), 10 November 1995 (10.11.1995), entire text; all drawings (Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04030120 B
- JP 2000056694 A
- JP 2009229556 A
- JP 2008110905 A
- JP 2001233611 A
- JP 2004203683 A
- JP 2012025650 A
- JP 2008208231 A